# EUROPEAN PATENT SPECIFICATION

(11) **EP 2 162 498 B1**
(45) Date of publication and mention of the grant of the patent: **13.04.2011**
(21) Application number: 08795935.9
(22) Date of filing: 19.06.2008
(51) Int. Cl.: C09D 5/20, B08B 7/00, C11D 11/00

(54) **METHOD FOR PROTECTING SUBSTRATES AND REMOVING CONTAMINANTS FROM SUCH SUBSTRATES**
VERFAHREN ZUM SCHUTZ VON SUBSTRATEN UND ZUR ENTFERNUNG VON VERUNREINIGUNGEN AUS SOLCHEN SUBSTRATEN
MÉTHODE PERMETTANT DE PROTÉGER DES SUBSTRATS ET DE RETIRER DES AGENTS CONTAMINANTS DE CES SUBSTRATS

(30) Priority: 19.06.2007 US 944810 P
(43) Date of publication of application: 17.03.2010
(73) Proprietor: Cellular Bioengineering, Inc., Honolulu, HI 96826 (US)
(72) Inventor: EDGINGTON, Garry, Honolulu, Hawaii 96825 (US); GOTTO, Keegan Laurel, Honolulu, Hawaii 96822 (US)
(74) Representative: Hatzmann, Martin
(86) International application number: PCT/US2008/067454
(87) International publication number: WO 2008/157670

(56) References cited:
- WO-A-2007/100861
- US-A- 4 097 437
- US-A1- 2005 061 357
- US-A1- 2006 018 853

## Description

This application claims priority under 35 U.S.C. §119(e) to U.S. Provisional Application Serial No. 60/944,810 filed June 19, 2007. This prior application is incorporated herein by reference.

### Technical Field

This invention relates to a method for removing contaminants from substrates. More particularly, this invention relates to sacrificial barrier coatings which may be used to protect a wide variety of substrate from a wide variety of contaminants, including graffiti, as well as radioactive contaminants (e.g., Iodine 131, Technitium 99m, etc.), dirt or soil, toxins, and the like.

### Background

Graffiti is a common problem encountered in areas of access to the general public. Moreover, generally, unwanted markings on surfaces can occur almost anywhere. For example, walls in homes may be marked accidentally or by children, and in the workplace walls and other surfaces may be marked inadvertently or unavoidably for any of a number of reasons. Graffiti is often in the form of paint, such as spray paint, but graffiti and other markings may be applied by markers, chalk, crayons, and other writing fluids. As used herein, the term "graffiti" will be used to refer broadly to unwanted markings, whether consisting of paint, other unwanted markings, scuff marks, and the like.

These markings are particularly troublesome because they are often difficult to remove from the surfaces on which they have been applied. Thus, painted surfaces often must be repainted to cover up the markings and sometimes must be even stripped and then repainted. For example, graffiti often is applied with paint similar to that on the surface. Removal of the graffiti paint by abrasion or with a toxic or flammable solvent therefore may be impractical because it typically results in removal of at least a portion of the underlying paint. Unpainted surfaces sometimes must be sandblasted to remove the graffiti markings.

### Summary

Barrier coatings may be used to combat contaminant materials such as graffiti. These coatings may be divided into two categories: sacrificial and non-sacrificial. With both types of barrier coatings, the coatings prevent the contaminant from reaching the substrate, making the contaminant easy to remove. With a sacrificial barrier coating, as the name implies, at least a portion of the barrier coating is "sacrificed" during clean up. Clean up may involve, for example, washing, wiping, scrubbing, spraying and/or rinsing. After clean up, another coat of the sacrificial coating may be applied. Non-sacrificial barrier coatings, by contrast, do not involve removal of the coating and do not require recoating after the contaminant material has been removed. Non-sacrificial barrier coatings typically involve the use of coatings based on aliphatic urethane compounds, rubber silicone-based compounds, or waterborne polyurethanes.

This invention relates to a method employing a sacrificial barrier coating for protecting a substrate from damage due to various contaminants. The inventive method comprises: applying a coating composition to the substrate, the coating composition comprising water, a water-soluble film forming polymer, a wetting agent and a thixotropic additive; dehydrating the coating composition and/or crosslinking the polymer to form a sacrificial barrier coating; depositing a contaminant material on the barrier coating; and removing the barrier coating and the contaminant material from the substrate. The barrier coating and the contaminant material may be removed by any number of traditional methods including washing, wiping, scrubbing, spraying and/or rinsing. The contaminant material may comprise any undesirable contaminant, including graffiti, as well as radioactive contaminants (e.g., Iodine 131, Technitium 99m, etc.), dirt or soil, toxins, and the like.

### Detailed Description

All ranges and ratio limits disclosed in the specification and claims may be combined in any manner. It is to be understood that unless specifically stated otherwise, references to "a," "an," and/or "the" may include one or more than one, and that reference to an item in the singular may also include the item in the plural. All combinations specified in the claims may be combined in any manner.

The term "water-soluble" refers to a material that is soluble in water at a temperature of 20°C to the extent of at least about 5 grams of the material per liter of water. The term "water-soluble" may also refer to a material that forms an emulsion in water.

The term "sacrificial barrier coating" refers to a coating that is applied to a substrate to protect the substrate from contamination, and is at least partially removed, and in one embodiment completely removed, during clean up to remove the contaminant.

The terms "dehydrating" and "drying" may be used interchangeably.

The coating composition may comprise water, at least one water-soluble film forming polymer, at least one wetting agent, and at least one thixotropic additive. The polymer may comprise repeating units derived from vinyl alcohol and/or meth(acrylic) acid. The polymer may comprise vinyl alcohol, a copolymer of vinyl alcohol, or a mixture thereof. The term "copolymer" may be used herein to refer to a polymer with two or more different repeating units including copolymers, terpolymers, and the like.

The polymer may comprise an atactic polyvinyl alcohol. These polymers may have a semicrystalline character and a strong tendency to exhibit both intermolecular and intra-molecular hydrogen bonds.

The polymer may comprise repeating units represented by the formula -CH₂-CH(OH)- and repeating units represented by the formula -CH₂-CH(OCOR)- wherein R is an alkyl group. The alkyl group may contain from 1 to about 6 carbon atoms, and in one embodiment from 1 to about 2 carbon atoms. The number of repeating units represented by the formula -CH₂-CH(OCOR)- may be in the range from about 0.5% to about 25% of the repeating units in the polymer, and in one embodiment from about 2 to about 15% of the repeating units. The ester groups may be substituted by acetaldehyde or butyraldehyde acetals.

The polymer may comprise a poly(vinyl alcohol/vinyl acetate) structure. The polymer may be in the form of a vinyl alcohol copolymer which also contains hydroxyl groups in the form of 1,2-glycols, such as copolymer units derived from 1,2-dihydroxyethylene. The copolymer may contain up to about 20 mole % of such units, and in one embodiment up to about 10 mole % of such units.

The polymer may comprise a copolymer containing repeating units derived from vinyl alcohol and/or (meth)acrylic acid, and repeating units derived from one or more of vinyl acetate, ethylene, propylene, acrylic acid, methacrylic acid, acrylamide, methacrylamide, dimethacrylamide, hydroxyethylmethacrylate, methyl methacrylate, methyl acrylate, ethyl acrylate, vinyl pyrrolidone, hydroxyethylacrylate, allyl alcohol, and the like. The copolymer may contain up to about 50 mole % of repeating units other than those of vinyl alcohol, and in one embodiment from about 1 to about 20 mole % of such repeating units other than vinyl alcohol.

Polyvinyl alcohols that may be used include those available under the tradenames Celvol 523 from Celanese (MW=85,000 to 124,000, 87-89% hydrolyzed), Celvol 508 from Celanese (MW=50,000 to 85,000, 87-89% hydrolyzed), Celvol 325 from Celanese (MW=85,000 to 130,000, 98-98.8% hydrolyzed), Vinol® 107 from Air Products (MW=22,000 to 31,000, 98-98.8% hydrolyzed), Polysciences 4397 (MW=25,000, 98.5% hydrolyzed), BF 14 from Chan Chun, Elvanol® 90-50 from DuPont and UF-120 from Unitika. Other producers of polymers that may be used may include Nippon Gohsei (Gohsenol®), Monsanto (Gelvatol®), Wacker (Polyviol®) or the Japanese producers Kuraray, Deriki, and Shin-Etsu.

The polymer may have a hydrolysis level in the range from about 70% to about 100%, and in one embodiment from about 70% to about 99.3%, and in one embodiment in the range from 70% to about 95%, and in one embodiment from about 70% to about 90%, and in one embodiment from about 75% to about 90%, and in one embodiment from about 87% to about 89%.

The polymer may comprise one or more poly(meth)acrylic acids (i.e. polyacrylic acid and/or polymethacrylic acid). These may include linear, crosslinked, lightly crosslinked, neutralized and/or partially neutralized forms of the polymer. These may be available under the name Polyacrylic Acid 5100 from Hampton Research; Poly(acrylic acid), which is a partial sodium salt, lightly crosslinked polymer available from Sigma Aldrich; Poly(acrylic acid) from Polysciences, Inc (MW ~90000 g/mol); and Poly(Acrylic Acid) from Polysciences Inc (MW:~100000 g/mol). Polymethacrylic acids that may be used may include those available under tradenames Poly(methacrylic acid solution salt) from Sigma Aldrich (MW: ~429,000 to 549,000 g/mol), and Poly Methacrylic Acid (25087-26-7) from Polysciences Inc (MW: ~100,000 g/mol).

The polymer may have an average molecular weight in the range from about 5,000 to about 2,000,000 g/mol, and in one embodiment from about 10,000 to about 1,000,000 g/mol, and in one embodiment from about 10,000 to about 600,000 g/mol, and in one embodiment from about 10,000 g/mol to about 250,000 g/mol, and in one embodiment from about 30,000 g/mol to about 190,000 g/mol, and in one embodiment in the range from about 50,000 to about 150,000 g/mole, and in one embodiment in the range from about 85,000 to about 125,000 g/mole.

The concentration of the polymer in the coating composition (before dehydrating) may be in the range from about 0.1 to about 50% by weight, and in one embodiment from about 1 to about 25% by weight, and in one embodiment in the range from about 2 to about 15% by weight, and in one embodiment in the range from about 2 to about 6% by weight. The coating composition may have a concentration of water (before dehydrating) in the range from about 40 to about 99.9% by weight, and in one embodiment from about 75 to about 99% by weight, and in one embodiment from about 90 to about 99% by weight. The water may be derived from any source. The water may comprise deionized or distilled water. The water may comprise tap water. The water may comprise sterile nanopure water.

The wetting agent may comprise one or more compounds that reduce the surface tension of the coating composition to permit it to spread across or penetrate more easily the surface of a substrate. The wetting agent may comprise a silicone surfactant. The wetting agent may comprise one or more polysiloxanes, for example, one or more poly(dimethylsiloxanes). The wetting agent may comprise one or more polysiloxanes, dimethylpolysiloxanes, polyether modified dimethylpolysiloxanes, polyester modified dimethylpolysiloxanes, polymethylalkylsiloxanes, aralkyl modified polymethylalkylsiloxanes, alcohol alkoxylates, polyacrylates, polymeric fluorosurfactants, fluoro modified polyacrylates, or a mixture of two or more thereof. A wetting agent that may be used is Byk-345 which is a product of Chemie identified as polyether modified siloxane. In one embodiment, the wetting agent may function as a leveling agent. The concentration of the wetting agent in the coating composition (before dehydrating) may be in the range from about 0.05 to about 10% by weight of the coating composition, and in one embodiment in the range from about 0.1 to about 5% by weight, and in one embodiment from about 0.1 to about 2% by weight, and in one embodiment in the range from about 0.2 to about 1 % by weight.

The thixotropic additive may comprise one or more compounds that enables the coating composition to thicken or stiffen in a relatively short period of time on standing at rest but, upon agitation or manipulation (e.g., brushing, rolling, spraying) to flow freely. The thixotropic additive may comprise fumed silica, treated fumed silica, clay, hectorite clay, organically modified hectorite clay, a thixotropic polymer, a pseudoplastic polymer, polyurethane, a polyhydroxycarboxylic acid amide, modified urea, urea modified polyurethane, or a mixture of two or more thereof. A thixotropic additive that may be used is Byk-420 which is a product of Chemie identified as a modified urea. The concentration of the thixotropic additive in the coating composition (before dehydrating) may be in the range from about 0.01 to about 10% by weight of the coating composition, and in one embodiment in the range from about 0.05 to about 5% by weight, and in one embodiment from about 0.1 to about 4% by weight, and in one embodiment in the range from about 0.5 to about 3.5% by weight.

The coating composition may further comprise one or more pseudoplastic additives, rheology modifiers, anti-sagging agent, anti-settling agents, leveling agents, pH modifiers, defoamers, pigments, dyes, organic solvents, plasticizers, viscosity stabilizers, biocides, viricides, fungicides, humectants, crosslinkers, surfactants, colorants, UV stabilizers, or a mixture of two or more thereof.

A single additive may provide two or more of the foregoing functions. For example, Byk-420 may function as both a thixotropic additive and an anti-sagging additive.

The defoamer may comprise a polysiloxane defoamer. The defoamer may comprise octyl alcohol, aluminum stearate, a sulfonated hydrocarbon, a silicone, or a mixture of two or more thereof. A defoamer that may be used is Byk-028 which is a product of Chemie identified as a mixture of foam destroying polysiloxanes and hydrophobic solids in polyglycol.

The pH modifier may comprise an alkali metal hydroxide such as sodium hydroxide or potassium hydroxide. The pH modifier may compirse hydrochloric acid, acetic acid, phosphoric acid, citric acid, or a mixture of two or more thereof.

The organic solvent may comprise one or more alcohols, for example, methanol, ethanol, propanol, isopropanol, butanol, one or more ketones, for example, acetone, one or more acetates, for example, methyl acetate, or a mixture of two or more thereof.

The plasticizer may comprise ethylene glycol, polyethylene glycol, propylene glycol, polypropylene glycol, butane diol, polybutylene glycol, glycerine, or a mixture of two or more thereof.

The viscosity stabilizer may comprise a mono or multifunctional hydroxyl compound. These may include methanol, ethanol, propanol, butanol, ethylene glycol, polyethylene glycol, propylene glycol, polyethylene glycol, propylene glycol, polypropylene glycol, butane diol, polybutylene glycol, glycerol, or a mixture of two or more thereof.

The biocide, viricide or fungicide may comprise sodium hypochlorite, potassium hypochlorite, pH-amended sodium hypochlorite, quaternary ammonium chloride, pH-amended bleach (Clorox®), CASCAD™ surface decontamination foam (AllenVanguard), DeconGreen (Edgewood Chemical Biological Center), DioxiGuard (Frontier Pharmaceutical), EasyDecon 200 (Envirofoam Technologies), Exterm-6 (ClorDiSys Solutions), Hl-Clean 605 (Howard Industries), HM-4100 (Biosafe) KlearWater (Disinfection Technology), Peridox (Clean Earth Technologies) Selectrocide (BioProcess Associates), EasyDECON™ 200 decontamination solution, or a mixture of two or more thereof. The biocides may include Kathon LX (a product of Rohm and Hass Company comprising 5-chloro-2-methyl-4-isothiazolin-3-one and 2-methyl-4-isothiazolin-3-one) or Dowacil 75 (a product of Dow Chemical identified as being 1-(3-chloroallyl)-3,5,7-triaza-1-azoniaadamantane chloride and described as being useful as a preservative for antimicrobial protection).

The crosslinker may comprise sodium tertraborate, glyoxal, Sunrez 700 (a product of Sequa Chemicals identified as cyclic urea/glyoxal/polyol condensate), Bacote-20 (a product of Hopton Technology identified as stabilized ammonium zirconium carbonate), Polycup-172 (a product of Hercules, Inc. identified as a polyamide-epichlorohydrin resin), or a mixture of two or more thereof.

The humectant may comprise polyacrylic acid, polyacrylic acid salt, an acrylic acid copolymer, a polyacrylic acid salt copolymer, or a mixture of two or more thereof.

The surfactant may comprise sodium dodecyl sulfate, sodium lauryl sulfate, cetyltrimethylammonium bromide, cetyltrimethyl ammonium chloride, hexadecyl trimethyl ammonium bromide, hexadecyl trimethyl ammonium chloride, or a mixture of two or more thereof.

The colorant may comprise one or more dyes, pigments, and the like. These may include blue food coloring from McCormick and Company Inc., and/or Spectrazurine Blue FND-C LIQ from Spectra Colors Corp. The colorant may comprise one or more dyes that become fluorescent upon drying or in response to a change in pH.

The UV stabilizer may comprise one or more of a paraaminobenzoic acid (and derivatives), octyl cinnamate and its derivatives, benzophenone and its derivatives, ultrafine titanium dioxide powder and hindered amine/amide light stabilizers such as Ciba® CHIMASSORB® 944, Ciba® TINUVIN® 123, Ciba® TINUVIN® 622, Ciba® TINUVIN® 765, Ciba® TINUVIN® 770, Ciba® TINUVIN® P, Ciba@, TINUVIN® 213, Ciba® TINUVIN® 234, Ciba® TINUVIN® 326, Ciba® TINUVIN® 327, Ciba® TINUVIN® 328, Ciba® TINUVIN® 571, Ciba® TINUVIN® B 75, and/or Ciba® TINUVIN® B 88.

The concentration of each of the foregoing additives in the coating composition (prior to dehydrating) may be up to about 25% by weight, and in one embodiment up to about 10% by weight, and in one embodiment up to about 5% by weight, and in one embodiment up to about 2% by weight, and in one embodiment up to about 1% by weight.

The coating composition may have a broad range of viscosities and rheological properties which may allow the coating composition spread over the surface of a substrate and to allow for a variety of application methods including application via brush, roller, spray equipment, and the like. The Brookfield Viscosity of the coating composition (prior to dehydrating) may be in the range from about 5 to about 100,000 centipoise, and in one embodiment in the range from about 10 to about 25,000 centipoise measured at the rpm and spindle appropriate for the sample in the range of 0.3 - 200 rpm and spindles 1-4 at 25°C. The coating composition may have a sufficient viscosity to permit it to form a wet film on a horizontal and/or a non-horizontal substrate that upon dehydrating forms a solid matrix or film. The coating composition may have a pH in the range from about 4 to about 10, and in one embodiment in the range from about 4 to about 8.

The inventive method may comprise applying the coating composition to a substrate and then dehydrating or drying the coating composition and/or crosslinking the polymer to form a sacrificial barrier coating. The coating composition may be applied to the substrate using conventional coating techniques, for example, brushing, rolling, spraying, spreading, smearing, and the like. Dehydration or drying may be enhanced using fans, dehumidifiers, a heat source, or a combination thereof. The barrier coating may remain applied to the substrate until the build up of contaminant material (e.g., graffiti) reaches the point where removal is desirable. The contaminant material along with at least part of the barrier coating, and in one embodiment all of the barrier coating, may then be removed from the substrate. The contaminant material and the barrier coating may be removed using conventional methods, for example, peeling, washing, wiping, scrubbing, spraying and/or rinsing. This may include applying composition comprising water (e.g., a cleaning solution comprising soap or detergent and water) to the contaminant and the barrier coating, and then removing the contaminant material and at least part of the barrier coating from the substrate. The contaminant material and the barrier coating may be removed by power washing at a temperature in the range from about 10°C to about 100°C, and in one embodiment from about 50°C to about 90°C; and a pressure in the range from about 250 to about 5000 pounds per square inch (psi) (17.2 to 345 bars), and in one embodiment from about 500 to about 2500 psi (34.4 to 241.3 bars).

When the coating composition is dehydrated or dried, the resulting barrier coating overlying the surface of the substrate may be transparent or colored, preferably transparent. The coating composition may be colored with one or more pigments, dyes, invisible dyes, and/or dyes that change color in response to a change in pH. The barrier coating may have a concentration of water in the range up to about 25% by weight, and in one embodiment up to about 15% by weight. The barrier coating may have a thickness in the range from about 0.25 to about 50 mils, and in one embodiment from about 0.2 to about 10 mils.

The coating composition may be delivered to the point of use in the form of a concentrate containing a reduced concentration of water or in a rehydratable form such as a powder that may be rehydrated at the time of use.

The amount of the coating composition needed to adequately coat a substrate will be dependent on the nature of the surface of the substrate, with a greater quantity being needed to provide adequate coverage on more porous surfaces such as stucco, brick, cement and the like, and a smaller quantity being needed on smooth surfaces such as metal signs. The coat density may be in the range from about 100 to about 500 square feet per gallon for stucco, brick or similar porous surfaces, and from about 100 to about 1000 square feet per gallon for smooth surfaces. One or more coats may be applied.

After application, the barrier coating may be usable as a protective barrier as soon as it is dehydrated or dried, which may be within about 5 to about 180 minutes, depending on environmental conditions. The coating may form a transparent or colored shield or barrier layer over the underlying surface. Any contaminants, such as graffiti markings, deposited on the barrier coating may be prevented from contacting and marking the underlying surface.

If a contaminant material such as graffiti is deposited on the barrier coating or if the coating becomes excessively soiled, the contaminant may be removed, together with at least part of the barrier coating, as described above. A new protective barrier coating may then be applied.

The sacrificial barrier coating that is applied to a substrate pursuant to the inventive method may be water soluble or water soluble when contacted with a water based solution that contains additives that increase the water solubility of the barrier coating. Alternatively or also, the adhesion of the barrier coating to the substrate may be reduced when contacted with water or a water based solution containing additives that reduce the adhesion of the coating to the substrate.

The sacrificial barrier coating may be sprayed from a traditional hand pump spray bottle or other spray apparatus. The coating may be sprayed on almost any surface including surfaces above urinals or on bathroom stalls known to be targets for contaminants such as graffiti. When the coating dries, it may act as a barrier coating protecting the substrate from contact with the contaminant. When washed with water or a water based solution, the coating may dissolve and be removed thus also removing the contaminant. An example of a contaminant is the ink from a permanent marker. When applied to a painted surface the ink may be difficult to remove requiring harsh scrubbing or solvents that may damage the painted surface. However, because the ink never touches the paint when the sacrificial barrier coating has been employed, the painted surface may be cleaned relatively easily and not be damaged during the cleaning process.

The barrier coating and contaminant material may be removed by contacting the barrier coating and contaminant material with a treating composition comprising water, a water-soluble film forming polymer, a wetting agent and a thixotropic additive as described above. The treating composition may have the same formulation as the coating composition. The treating composition may be dehydrated to form a treating film, and the method may further comprise separating the barrier coating, contaminant material and treating film from the substrate. The barrier coating, contaminant material and treating film may be peeled from the substrate. This peeling may be accomplished in a single step.

The coating composition may be used as a cleaning composition. For example, a hand pump spray bottle can be used to apply the coating composition to a substrate that has a sacrificial barrier on it and graffiti written on the barrier coating. The graffiti may be removed by wiping it off in a traditional manner (e.g. traditional bathroom cleaner). After cleaning, a thin layer of the cleaning composition may be left behind that dries or dehydrates to form a layer of the sacrificial barrier coating. This may improve the ease of removal of contaminant materials such as graffiti in the future. After cleaning, the surface may also be sprayed an additional time with the coating composition leaving a thicker barrier coating and further improving the efficacy of the sacrificial barrier coating.

As indicated above, the coating composition may include one or more crosslinkers. Sodium tetraborate, as well as others as indicated above, may be used to crosslink polymers containing vinyl alcohol repeating units. Divalent or trivalent cations, for example, calcium hydroxide or calcium oxide, may be used to crosslink polymers comprising repeating units derived from acrylic acid and/or methacrylic acid. The coating composition may be applied to a substrate at a pH below about 6.8, and after application as a coating, the pH may rise when in contact with the environment (or atmosphere). This may increase the crosslink density as the coating dehydrates or dries. Increasing the crosslink density may increase the stability of the coating in the presence of moisture such as in the exterior environment (outdoors). The coating may be removed using conventional methods such as washing, scrubbing, spraying, and the like.

Removal of crosslinked barrier coatings may be facilitated by using a water solution with additives that destroy the crosslinks of the coatings. For example, an acidic solution with a pH below about 6.8, and in one embodiment below about 6.0, may be used. The acidic solution may be mixed with rinse water using, for example, a power washer attached to a city water outlet. The power washer may have attached to it, via a soap solution inlet, an inlet for a concentrated acid such as hydrochloric acid with a pH between about 0.0 and about 6.0. The acid solution may be mixed with the water when the power washer is in use, forming an aqueous solution with the desired pH. In an acidic environment, the crosslinks formed between, for example, a tetraborate anion and polyvinyl alcohol may be reduced, thus increasing the water solubility or water sensitivity of the barrier coating and thereby allowing for easier removal. Monovalent cations, for example, sodium hydroxide or potassium hydroxide, may be used to increase the water solubility of un-neutralized or partially neutralized polymers comprising repeating units derived from acrylic acid and/or methacrylic acid as well as to reduce the crosslink density of the polymers that have been crosslinked with divalent or trivalent cations. The crosslinker may be used to decrease the barrier coating moisture sensitivity in outdoor environments and a water solution employing one or more additives may be used to increase the barrier coating moisture sensitivity during the cleaning process. Crosslinkers may be employed for interior and exterior applications.

The following examples are provided to further describe the invention. In these examples, as well as throughout the text, unless otherwise indicated, all parts and percentages are by weight.

### Example 1

A jacketed one-liter reactor equipped with a thermocouple, condenser and stir motor is charged with 667.2g of distilled water, 4.2g of Byk-028, and 4.6g of 46% by weight NaOH. The resulting aqueous composition is agitated until the salts are dissolved followed by the addition of 169.6g of Celvol 523. The mixture is heated to 85°C and held for 30 minutes, then cooled to 65°C. 48.3g of 95% ethanol is added followed by 25.4g BYK-420 in a drop-wise fashion. The formulation is then agitated for one hour at 65°C. A premix of 1.7g of Dowicil 75 and 121.1g of distilled water is slowly added with strong agitation. The mixture is then filtered to yield Formulation A. Formulation A has a Brookfield viscosity of 59,250 cP (3 rpm, 25°C, L4 spindle) and pH = 7.74.

A 200.0g aliquot of Formulation A is added to 800.0g of deionized (DI) water under medium agitation and stirred for 20 minutes to yield Formulation B.

### Example 2

A jacketed one-liter reactor equipped with a thermocouple, condenser and stir motor is charged with 667.2g of distilled water, 4.2g of Byk-028, and 4.6g of 46% by weight NaOH. The resulting aqueous composition is agitated until the salts are dissolved followed by the addition of 169.6g of water soluble polymer Celvol 508. The mixture is heated to 85°C and held for 30 minutes, then cooled to 65°C. 48.3g of 95% ethanol are added drop-wise followed by 25.4g of BYK-420 in a drop-wise fashion. The formulation is agitated for one hour at 65°C. A premix of 1.7g of Dowicil 75 and 121.1g of distilled water is slowly added with strong agitation. The mixture is filtered to yield Formulation C. Formulation C has a Brookfield viscosity of 23740 cP (3 rpm, 25°C, L4 spindle) and a pH =7.28.

A 100.0g aliquot of Formulation C is added to 400.0g of DI water under medium agitation and stirred for 20 minutes to yield Formulation D.

Testing is conducted to determine the barrier coating effectiveness of Formulation B versus Formulation D. The substrates are prepared using 12 inch (30.5 cm) square mirrored panels painted with (a) white Rustoleum flat spray paint and (b) white Rustoleum semi-gloss spray paint. Formulations B and D are drawn down onto the horizontal panels using the following wire wound draw down bars: #20, #40, #80, and #200 to produce reproducible wet film thicknesses of the formulations. After a 24 hour dry time, permanent marker (Sharpie brand) is used to mark up the panels. After a 20 minute dry time (for the marker), the panels are wetted with water and agitated with paper towels to determine the barrier properties of the dried formulations. The #20 wire bar (2.0 mil wet film thickness) produces a visible difference in the formulations. Formulation D has bleed through of the marker resulting in incomplete removal of the permanent marker. Formulation B produces complete removal of the permanent marker.

### Example 3

A 96.0g aliquot of Formulation B is mixed with 4.0g of BYK 333 (product of Chemie identified as a polyether modified dimethylpolysiloxane copolymer) under medium agitation for 10 minutes to form Formulation E.

### Example 4

A 96.0g aliquot of Formulation B is mixed with 4.0g of BYK 307 (product of Chemie identified as a high slip polyether modified dimethylpolysiloxane copolymer) under medium agitation for 10 minutes to form Formulation F.

### Example 5

A 96.0g aliquot of Formulation B is mixed with 4.0g of BYK 345 under medium agitation for 10 minutes to form Formulation G.

Formulations B, E, F, and G are drawn down on horizontal panels (as in Example 2) to determine wet out efficacy of each formulation at equal film thicknesses and compared as barrier coatings against a permanent marker (Sharpie brand). Each formulation produces an effective barrier coating with Formulation G being more effective than B, E, or F based on overall quality of wet out and lack of marker seep through.

### Example 6

20.0g of Formulation A are mixed with 80.0g of distilled water and 0.1g of BYK 345 under medium agitation for 10-15 minutes to yield Formulation H.

### Example 7

80.0g distilled water and 0.3g of BYK 345 under medium agitation for 10-15 minutes to yield Formulation I.

### Example 8

20.0g of Formulation H are mixed with 80.0g of distilled water and 0.5g of BYK 345 under medium agitation for 10-15 minutes to yield Formulation J.

Formulations B, H, I, and J are drawn down on painted panels (as in Example 2) at 2.0 mil wet film thickness to determine the efficacy of each. After 24 hours, a Sharpie brand marker is drawn across the dried filmed and allowed to cure for 20 minutes. Water and paper towel agitation are used to remove the films from the painted substrate. Each formulation produces an effective barrier coating with Formulation I providing better barrier protection while still contributing to wet out. This is shown below.

| **Formulation** | **Parts on one hundred BYK 345** | **Wet out rating** | **Barrier rating** |
|---|---|---|---|
| B | 0 | 4 | 2 |
| H | 0.1 | 2 | 2 |
| I | 0.3 | 1 | 1 |
| J | 0.5 | 1 | 3 |

### Example 9

A 99.2g aliquot of Formulation B is added to 0.8g of Stanfax 1025 (an aqueous sodium lauryl sulfate solution supplied by Para Chem, Chemidex LLC, which is abbreviated herein as S125) by mixing under medium agitation for 10-15 minutes to yield Formulation K.

### Example 10

A 98.4g aliquot of Formulation B is added to 1.6g of S125 by mixing under medium agitation for 10-15 minutes to yield formulation L.

Formulations K and L are compared against Formulation B at equal film thicknesses as barrier coatings against permanent marker on both semi gloss and flat horizontal substrates. Each formulation is evaluated for leveling and marker test results on a scale of 1-5 (with 1 being the best). The results are summarized in the following table.

| **Formula** | **S125 (pph)** | **Bar#** | **Paint** | **Leveling** | **Marker Test** |
|---|---|---|---|---|---|
| B | 0.0 | R200 | spray gloss | 1 | 1 |
| B | 0.0 | R80 | spray gloss | 1 | 1 |
| B | 0.0 | R40 | spray gloss | 1 | 1 |
| B | 0.0 | R20 | spray gloss | 1 | 1 |
| B | 0.0 | R200 | spray flat | 1 | 1 |
| B | 0.0 | R80 | spray flat | 1 | 1 |
| B | 0.0 | R40 | spray flat | 1 | 2 |
| B | 0.0 | R20 | spray flat | 1 | 2 |
| B | 0.0 | R20 | house gloss | 1 | 1 |
| B | 0.0 | R20 | house flat | 1 | 1 |
| K | 0.8 | R200 | spray gloss | 3 | 1 |
| K | 0.8 | R80 | spray gloss | 3 | 2 |
| K | 0.8 | R40 | spray gloss | 4 | 3 |
| K | 0.8 | R20 | spray gloss | 4 | 4 |
| K | 0.8 | R200 | spray flat | 3 | 1 |
| K | 0.8 | R80 | spray flat | 3 | 2 |
| K | 0.8 | R40 | spray flat | 3 | 3 |
| K | 0.8 | R20 | spray flat | 3 | 4 |
| K | 0.8 | R20 | house gloss | 4 | 3 |
| K | 0.8 | R20 | house flat | 4 | 2 |
| L | 1.6 | R200 | spray gloss | 3 | 1 |
| L | 1.6 | R80 | spray gloss | 3 | 2 |
| L | 1.6 | R40 | spray gloss | 4 | 3 |
| L | 1.6 | R20 | spray gloss | 4 | 4 |
| L | 1.6 | R200 | spray flat | 3 | 1 |
| L | 1.6 | R80 | spray flat | 3 | 2 |
| L | 1.6 | R40 | spray flat | 3 | 3 |
| L | 1.6 | R20 | spray flat | 3 | 4 |
| L | 1.6 | R20 | house gloss | 3 | 3 |
| L | 1.6 | R20 | house flat | 4 | 2 |

### Example 11

A jacketed one-liter reactor equipped with a thermocouple, condenser and stir motor is charged with 656.1g of distilled water, 4.2g of Byk-028, and 4.6g of 46% by weight NaOH. The resulting aqueous composition is agitated until the salts are dissolved followed by the addition of 166.7g of Celvol 523. The mixture is heated to 85°C and held for 30 minutes, then cooled to 65°C. The formulation is then agitated for one hour at 65°C. A premix of 1.7g Dowicil 75 and 119.2g of distilled water is slowly added with strong agitation to yield Formulation M. Formulation M has a Brookfield viscosity = 18520 cP (3 rpm, 25°C, L4 spindle) and pH = 7.38.

A 20.0g aliquot of Formulation M is mixed with 79.4g of water under medium agitation for 10 minutes. 0.6g Cab-O-Sperse 2020K (a dispersed fumed silica rheological additive from Cabot Corporation) is slowly added with increased agitation over 5 minutes. Agitation is continued for 10 minutes to yield Formulation M.

### Example 12

A 20.0g aliquot of Formulation M is mixed with 78.4g of water under medium agitation for 10 minutes. Agitation increases to high as 1.6g of Cab-O-Sperse 2020K are slowly added with increased agitation over 5 minutes. Agitation is continued for 10 minutes to yield Formulation O.

### Example 13

A 20.0g aliquot of Formulation M is mixed with 78.0g of water under medium agitation for 10 minutes. Agitation is increased to high as 2.0g of Cab-O-Sperse 2020K are slowly added with increased agitation over 5 minutes. Agitation is continued for 10 minutes to yield Formulation P.

### Example 14

A 20.0g aliquot of Formulation M is mixed with 77.1g of water under medium agitation for 10 minutes. Agitation is increased to high as 2.9g Cab-O-Sperse 2020K are slowly added with increased agitation over 5 minutes. Agitation is continued for 10 minutes to yield Formulation Q.

### Example 15

A 20.0g aliquot of Formulation M is mixed with 76.2g of water under medium agitation for 10 minutes. Agitation is increased to high as 3.8g Cab-O-Sperse 2020K are slowly added with increased agitation over 5 minutes. Agitation is continued for 10 minutes to yield Formulation R.

### Example 16

A 20.0g aliquot of Formulation M is mixed with 72.6g of water under medium agitation for 10 minutes. Agitation is increase to high as 7.4g Cab-O-Sperse 2020K is slowly added with increased agitation over 5 minutes. Agitation is continued for 10 minutes to yield Formulation S.

The viscosity of Formulation S and Formulation B are as follows (200 rpm , L1 spindle, 25°C, Thermo Haake 6 Plus Viscotester):

| **Formulation** | **Viscosity (cP)** |
|---|---|
| Formulation B | 23 |
| Formulation S | 18 |

### Example 17

A 20.0g aliquot of Formulation M is mixed with 72.6 of water under medium agitation for 10 minutes. Agitation is increased as 7.4g Cab-O-Sperse 4012K (a small particle silica emulsion from Cobot Corporation) are slowly added with increased agitation over 5 minutes. Agitation is continued for 10 minutes to yield Formulation T.

Formulations containing the fumed silica Cab-O-Sperse (including (Cab-O-Sperse 2020K or 4012K from Examples 11-17) show a matting effect when applied to surfaces thus creating a flat appearance, complimentary as a barrier coating to flat or dull surfaces.

### Example 18

A 30.0g aliquot of Formulation A is mixed with 0.3g of BYK 345, 69.0g distilled water, 0.05g of McCormick blue food coloring, and 1.0g of glycerol (99+% pure, synthetic supplied by Acros Organics) for 15 minutes to yield formulation U.

### Example 19

A 30.0g aliquot of Formulation A is mixed with 0.3g of BYK 345, 68.0g distilled water, 0.05g McCormick blue food coloring, and 2.0g of glycerol (99+% pure, synthetic) for 15 minutes to yield formulation V.

### Example 20

A 30.0g aliquot of Formulation A is mixed with 0.3g BYK 345, 65.0g distilled water, 0.05g McCormick blue food coloring, and 5.0g glycerol (99+% pure, synthetic) under medium agitation for 15 minutes to yield Formulation W.

Formulations U, V and W are drawn down on cured Rustoleum semi gloss spray painted panels at 2 mil wet film thicknesses and allowed to dry for 24 hours. Krylon blue spray paint is sprayed across the coated panels. The formulations are tested for ease of spray paint removal after 24 and 72 hour increments (recommended spray paint cure time is 24 hours). The films are then subjectively evaluated by scoring the film with a probe. A decrease in tear strength is observed as the glycerol concentration increases.

### Example 21

The pH of Formulation W is adjusted using hydrochloric acid to 6.0. To this mixture is added 0.25g sodium tetraborate under high agitation for 5 minutes to yield Formulation X. Formulation X is drawn down at 2.0 mil wet film thickness onto a 12 inch (30.5 cm) square mirror and tested for film strength by scoring with a probe.

### Example 22

A jacketed one-liter reactor equipped with a thermocouple, condenser and stir motor is charged with 450.0g of distilled water. Under high agitation, 50.0g Kuraray Exceval AQ 4104 (ethylene vinyl alcohol) is added and the mixture is heated to 85°C. The mixture is held at this temperature for 5 hours, then cooled to room temperature to yield Formulation Y. A 300 mL, three necked round bottom flask is equipped with a condenser and placed in a water bath. The flask is charged with 41.8g of Formulation Y, 0.214g of BYK 028, 0.094g of 46% NaOH, and heated to 65°C under medium agitation by stir bar. 0.321g of BYK 345 is added slowly to the mixture and the agitation is increased. 1.142g of 70% isopropanol are added to the mixture drop wise followed by 0.600g of BYK 420. The mixture is stirred at 65°C for one hour. A premix of 0.0368g Dowicil 75 and 50.5g distilled water is added with strong agitation. The formulation is cooled to yield Formulation Z.

### Example 23

Formulation I is sprayed (using a Zep commercial spray bottle) on a vertical painted wall (Behr brand semigloss washable indoor) and allowed to dry for 12 hours. Krylon blue spray paint is sprayed onto the barrier (dried Formulation I) and cured for 72 hours. A strip of duct tape is firmly applied across the spray paint and peeled, taking with it much of the dried Krylon spray paint. A water soaked coarse sponge is used to remove the remaining spray paint and sacrificial coating from the painted wall.

While the invention has been explained in relation to various embodiments, it is to be understood that various modifications thereof may become more apparent to those skilled in the art upon reading this specification. Therefore, it is to be understood that the invention includes all such modifications that may fall within the scope of the appended claims.

## Claims

1. A method for removing contaminant material from a substrate, comprising:
applying a coating composition to the substrate, the coating composition comprising water, a water-soluble film forming polymer, a wetting agent and a thixotropic additive;
wherein the wetting agent comprises one or more polysiloxanes, dimethylpolysiloxanes, polyether modified dimethylpolysiloxanes, polyester modified dimethylpolysiloxanes, polymethylalkylsiloxanes, aralkyl modified polymethylalkylsiloxanes, alcohol alkoxylates, polyacrylates, fluoro modified polyacrylates, or a mixture of two or more thereof;
dehydrating the coating composition and/or crosslinking the polymer to form a sacrificial barrier coating, the sacrificial barrier coating being water soluble or water soluble when contacted with a water based solution that contains additives that increase the water solubility of the sacrificial barrier coating, or alternatively or also, the adhesion of the sacrificial barrier coating to the substrate being reduced when contacted with water or a water based solution containing additives that reduce the adhesion of the sacrificial barrier coating to the substrate;
depositing the contaminant material on the barrier coating; and
removing at least part of the barrier coating and the contaminant material from the substrate.

2. The method of claim 1 wherein the coating composition is applied to the substrate by brushing, rolling or spraying the coating composition on to the substrate.

3. The method of claim 1 or claim 2 wherein the barrier coating and contaminant material are removed from the substrate by peeling, washing, wiping, scrubbing, spraying and/or rinsing.

4. The method of any of the preceding claims wherein the barrier coating and contaminant material are removed from the substrate using a composition comprising water.

5. The method of any of the preceding claims wherein the barrier coating and contaminant material are removed from the substrate by spraying a composition comprising water at a temperature in the range from 10 to 100°C and under a pressure in the range from 50 to 400 bars; or
wherein the barrier coating and contaminant material are removed by contacting the barrier coating and contaminant material with a treating composition comprising water, a water-soluble film forming polymer, a wetting agent and a thixotropic additive.

6. The method of claim 5 wherein the treating composition has the same formulation as the coating composition; or
wherein the treating composition is dehydrated to form a treating film, the method further comprising separating the barrier coating, contaminant material and treating film from the substrate.

7. The method of claim 6 wherein the barrier coating, contaminant material and treating film are peeled from the substrate.

8. The method of claim 7 wherein the barrier coating, contaminant material and treating film are peeled from the substrate in a single step.

9. The method of any of the preceding claims wherein the polymer comprises repeating units derived from vinyl alcohol and/or (meth)acrylic acid; or
wherein the polymer comprises polyvinyl alcohol, a copolymer of vinyl alcohol, or a mixture thereof.

10. The method of any of the preceding claims wherein the polymer comprises repeating units derived from vinyl alcohol and repeating units represented by the formula -CH₂-CH(OCOR)- wherein R is an alkyl group; or
wherein the polymer comprises repeating units derived from vinyl alcohol and vinyl acetate; or
wherein the polymer comprises a copolymer containing repeating units derived from vinyl alcohol and/or (meth)acrylic acid, and repeating units derived from one or more of ethylene, propylene, acrylic acid, methacrylic acid, acrylamide, methacrylamide, dimethacrylamide, hydroxyethylmethacrylate, methyl methacrylate, methyl acrylate, ethyl acrylate, vinyl pyrrolidone, hydroxyethylacrylate, allyl alcohol, or a mixture of two or more thereof.

11. The method of any of claims 1-10 wherein the polymer comprises polyvinyl alcohol, the polymer having a molecular weight in the range from about 50,000 to about 150,000 g/mole, and a hydrolysis level in the range from about 75% to about 90%.

12. The method of any of the preceding claims wherein the wetting agent comprises one or more silicone surfactants; or
wherein the wetting agent comprises one or more polyether modified siloxanes.

13. The method of any of the preceding claims wherein the thixotropic additive comprises fumed silica, treated fumed silica, clay, hectorite clay, organically modified hectorite clay, a thixotropic polymer, a pseudoplastic polymer, polyurethane, a polyhydroxycarboxylic acid amide, modified urea, urea modified polyurethane, or a mixture of two or more thereof;

14. The method of any of the preceding claims wherein the polymer composition further comprises one or more pseudoplastic addives, rheology modifiers, anti-sagging agents, anti-settling agents, leveling agents, pH modifiers, defoamers, pigments, dyes, organic solvents, plasticizers, viscosity stabilizers, biocides, viricides, fungicides, humectants, crosslinkers, surfactants, colorants, UV stabilizers, or a mixture of two or more thereof.

15. The method of any of the preceding claims wherein the film forming polymer comprises polyvinyl alcohol, and the coating composition further comprises a biocide.

## Patentansprüche

1. Verfahren zum Entfernen von verunreinigendem Material von einem Substrat, umfassend:
Aufbringen einer Überzugszusammensetzung auf das Substrat, wobei die Überzugszusammensetzung Wasser, ein wasserlösliches filmbildendes Polymer, ein Benetzungsmittel und einen thixotropen Zusatz umfasst;
wobei das Benetzurigsmittel ein oder mehrere Polysiloxane, Dimethylpolysiloxane, polyethermodifizierte Dimethylpolysiloxane, polyestermodifizierte Dimethylpolysiloxane, Polymethylalkylsiloxane, aralkylmodifizierte Polymethylalkylsiloxane, Alkoholalkoxylate, Polyacrylate, fluormodifizierte Polyacrylate, oder eine Mischung aus zwei oder mehreren davon umfasst;
Dehydratisieren der Überzugszusammensetzung und/oder Quervernetzen des Polymers, um einen Opferabdeckungsüberzug zu bilden, wobei der Opferabdeckungsüberzug wasserlöslich oder wasserlöslich bei Kontakt mit einer wasserbasierten Lösung ist, die Zusätze enthält, die die Wasserlöslichkeit des Opferabdeckungsüberzugs erhöhen, oder alternativ oder auch, die Adhäsion des Opferabdeckungsüberzuges an das Substrat, die bei Kontakt mit Wasser oder einer wasserbasierten Lösung reduziert wird, die Zusätze enthält, die die Adhäsion des Opferabdeckungsüberzuges an das Substrat reduzieren;
Ablegen des verunreinigenden Materials auf dem Abdeckungsüberzug; und
Entfernen von mindestens einem Teil des Abdeckungsüberzugs und des verunreinigenden Materials von dem Substrat.

2. Das Verfahren nach Anspruch 1 wobei die Überzugszusammensetzung auf das Substrat durch Pinseln, Einwalzen oder Aufsprühen der Überzugszusammensetzung auf das Substrat aufgebracht wird.

3. Das Verfahren nach Anspruch 1 oder Anspruch 2 wobei der Abdeckungsüberzug und das verunreinigende Material von dem Substrat durch Ablösen, Abwaschen, Abwischen, Abreiben, Absprühen und/oder Abspülen entfernt werden.

4. Das Verfahren nach einem der vorhergehenden Ansprüche wobei der Abdeckungsüberzug und das verunreinigende Material von dem Substrat durch Verwendung einer Wasser umfassenden Zusammensetzung entfernt werden.

5. Das Verfahren nach einem der vorhergehenden Ansprüche wobei der Abdeckungsüberzug und das verunreinigende Material von dem Substrat durch Aufsprühen einer Wasser umfassenden Zusammensetzung bei einer Temperatur im Bereich von 10 bis 100°C und unter einem Druck im Bereich von 50 bis 400 bar entfernt werden; oder
wobei der Abdeckungsüberzug und das Verschmutzungsmaterial durch Kontaktieren des Abdeckungsüberzuges und des Verschmutzungsmaterials mit einer Behandlungszusammensetzung, die Wasser, ein wasserlösliches filmbildendes Polymer, ein Benetzungsmittel und einen thixotropen Zusatz umfasst, entfernt werden.

6. Das Verfahrne nach Anspruch 5 wobei die Behandlungszusammensetzung die gleiche Formulierung wie die Überzugszusammensetzung aufweist; oder
wobei die Behandlungszusammensetzung dehydratisiert wird, um einen Behandlungsfilm zu bilden,
wobei das Verfahren ferner die Trennung des Abdeckungsüberzuges, des verunreinigende Materials und des Behandlungsfilms von dem Substrat umfasst.

7. Das Verfahren nach Anspruch 6 wobei der Abdeckungsüberzug, das verunreinigende Material und der Behandlungsfilm von dem Substrat abgeschält werden.

8. Das Verfahren nach Anspruch 7 wobei der Abdeckungsüberzug, das verunreinigende Material und der Behandlungsfilm von dem Substrat in einem einzigen Schritt abgelöst werden.

9. Das Verfahren nach einem der vorhergehenden Ansprüche wobei das Polymer sich wiederholende Einheiten abgeleitet aus Vinylalkohol und/oder (Meth)Acrylsäure umfasst; oder
wobei das Polymer Polyvinylalkohol, ein Copolymer von Vinylalkohol, oder ein Mischung davon umfasst.

10. Das Verfahren nach einem der vorhergehenden Ansprüche wobei das Polymer sich wiederholende Einheiten abgeleitet aus Vinylalkohol und sich wiederholende Einheiten dargestellt durch die Formel -CH₂-CH(OCOR)-, wobei R eine Alkylgruppe ist, umfasst; oder
wobei das Polymer sich wiederholende Einheiten abgeleitet von Vinylalkohol und Vinylacetat umfasst; oder
wobei das Polymer ein Copolymer umfasst, das sich wiederholende Einheiten abgeleitet von Vinylalkohol und/oder (Meth)Acrylsäure, und sich wiederholende Einheiten abgeleitet von einem oder mehreren von Ethylen, Propylen, Acrylsäure, Methacrylsäure, Acrylamide, Methacrylamid, Dimethacrylamid, Hydroxyethylmethacrylat, Methylmethacrylat, Methylacrylat, Ethylacrylat, Vinylpyrrolidon, Hydroxyethylacrylat, Allylalkohol, oder einer Mischung aus zwei oder mehreren davon beinhaltet.

11. Das Verfahren nach einem der Ansprüche 1 bis 10 wobei das Polymer Polyvinylalkohol umfasst, wobei das Polymer ein Molekulargewicht im Bereich von etwa 50000 bis etwa 150000 g/mol, und ein Hydrolysegrad von etwa 75% bis etwa 90% aufweist.

12. Das Verfahren nach einem der vorhergehenden Ansprüche wobei das Benetzungsmittel ein oder mehrere Silikontenside umfasst; oder
wobei das Benetzungsmittel ein oder mehrere polyethermodifizierte Siloxane umfasst.

13. Das Verfahren nach einem der vorhergehenden Ansprüche wobei der thixotrope Zusatz pyrogenes Siliziumdioxid, behandeltes pyrogenes Siliziumdioxid, Tonerde, Hektorit Tonerde, ursprünglich modifizierte Hektorit Tonerde, ein thixotropes Polymer, ein pseudoplastisches Polymer, Polyurethan, ein Polyhydroxycarbonsäureamid, modifizierten Harnstoff, harnstoffmodifiziertes Polyurethan, oder eine Mischung von zwei oder mehreren davon umfasst.

14. Das Verfahren nach einem der vorhergehenden Ansprüche wobei die Polymerzusammensetzung ferner einen oder mehrere pseudoplastische Zusätze, rheologische Modifiziermittel, Antiabsenkmittel, Antiabsetzmittel, Egalisiermittel, pH Modifiziermittel, Antischaummittel, Pigmente, Farbstoffe, organische Lösungsmittel, Weichmacher, Viskositätsstabilisatoren, Biozide, Virizide, Fungizide, Feuchthaltemittel, Quervernetzer, Tenside, Färbemittel, UV-Stabilisatoren, oder eine Mischung aus zwei oder mehreren davon umfasst.

15. Das Verfahren nach einem der vorhergehenden Ansprüche wobei das filmbildende Polymer Polyvinylalkohol umfasst, und die Überzugszusammensetzung ferner ein Biozid umfasst.

## Revendications

1. Un procédé pour retirer un matériau contaminant d'un substrat, comprenant:
l'application d'une composition de revêtement au substrat, la composition de revêtement comprenant de l'eau, un polymère filmogène hydrosoluble, un agent mouillant et un additif thixotrope;
dans lequel l'agent mouillant comprend un ou plusieurs polysiloxanes, diméthylpolysiloxanes, diméthylpolysiloxanes modifiés par un polyéther, diméthylpolysiloxanes modifiés par un polyester, polyméthylalkylsiloxanes, polyméthylalkylsiloxanes modifiés par un groupe aralkyl, alcool alkoxylates, polyacrylates, polyacrylates modifiés par un groupe fluoro, ou un mélange de deux ou plusieurs de ces composés;
la déshydratation de la composition de revêtement et/ou la réticulation du polymère pour former un un revêtement de protection sacrificiel, le un revêtement de protection sacrificiel étant hydrosoluble ou hydrosoluble quand il est mis en contact avec une solution à base d'eau qui contient des additifs qui augmentent la solubilité dans l'eau du un revêtement de protection sacrificiel, ou alternativement ou également, l'adhésion du un revêtement de protection sacrificiel au substrat étant réduite quand il est mis en contact avec de l'eau ou une solution à base d'eau contenant des additifs qui réduisent l'adhésion du un revêtement de protection sacrificiel au substrat;
le dépôt d'un matériau contaminant sur le revêtement protecteur; et le retrait d'au moins une partie du revêtement protecteur et du matériau contaminant du substrat.

2. Le procédé selon la revendication 1, dans lequel la composition de revêtement est appliquée au substrat par brossage, calandrage ou pulvérisation de la composition de revêtement sur le substrat.

3. Le procédé selon la revendication 1 ou la revendication 2 dans lequel le revêtement protecteur et un matériau contaminant sont retirés du substrat par pelage, lavage, essuyage, récurage, pulvérisation et/ou rinçage.

4. Le procédé selon une quelconque des revendications précédentes, dans lequel le revêtement protecteur et un matériau contaminant sont retirés du substrat en utilisant une composition comprenant de l'eau.

5. Le procédé selon une quelconque des revendications précédentes, dans lequel le revêtement protecteur et un matériau contaminant sont retirés du substrat par pulvérisation d'une composition comprenant de l'eau à une température de l'ordre de 10 à 100 C et sous une pression de l'ordre de 50 à 400 bars; ou
dans lequel le revêtement protecteur et un matériau contaminant sont retirés par contact du revêtement protecteur et du matériau contaminant par une composition de traitement comprenant de l'eau, un polymère filmogène hydrosoluble, un agent mouillant et un additif thixotrope.

6. Le procédé selon la revendication 5, dans lequel la composition de traitement présente la même formulation que la composition de revêtement;
ou dans lequel la composition de traitement est déshydratée pour former un film de traitement, ce procédé comprenant en outre la séparation du revêtement protecteur, du matériau contaminant et du film de traitement du substrat.

7. Le procédé selon la revendication 6, dans lequel le revêtement protecteur, le matériau contaminant et le film de traitement sont séparés du substrat par pelage.

8. Le procédé selon la revendication 7, dans lequel le revêtement protecteur, le matériau contaminant et le film de traitement sont séparés du substrat par pelage en une seule étape.

9. Le procédé selon une quelconque des revendications précédentes, dans lequel le polymère comprend des unités répétées dérivant d'alcool vinylique et/ou d'acide (méth)acrylique; ou
dans lequel le polymère comprend de l'alcool polyvinylique, un copolymère d'alcool vinylique ou un mélange de ces composés.

10. Le procédé selon une quelconque des revendications précédentes, dans lequel le polymère comprend des unités répétées dérivant d'alcool vinylique et des unités répétées représentés par la formule -CH₂-CH(OCOR)- dans laquelle R est un radical alkyl; ou
dans lequel le polymère comprend des unités répétées dérivant d'alcool vinylique et d'acétate de vinyle; ou
dans lequel le polymère comprend un copolymère contenant des unités répétées dérivant d'alcool vinylique et/ou d'acide (méth)acrylique; et unités répétées dérivant d' un ou plusieurs de : éthylène, propylène, acide acrylique, acide méthacrylique, acrylamide, méthacrylamide, diméthacrylamide. hydroxyéthylméthacrylate, méthylméthacrylate, méthyl acrylate, éthyl acrylate, vinyl pyrrolidone, hydroxyéthylacrylate, alcool allylique, ou un mélange de deux ou plusieurs de ces composés.

11. Le procédé selon une quelconque des revendications 1 à 10, dans lequel le polymère comprend de l'alcool polyvinylique, le polymère présentant un poids moléculaire de l'ordre d'environ 50 000 à environ 150 000g/mole, et un taux d'hydrolyse de l'ordre d'environ 75% à environ 90%.

12. Le procédé selon une quelconque des revendications précédentes, dans lequel l'agent mouillant comprend un ou plusieurs agents tensioactifs à base de silicone; ou
dans lequel l'agent mouillant comprend un ou plusieurs siloxanes modifiés par un polyéther.

13. Le procédé selon une quelconque des revendications précédentes, dans lequel l'additif thixotropie comprend de la silice pyrogénique, de la silice pyrogénique traitée, de l'argile, de l'argile hectorite, de l'argile hectorite modifiée par voie organique, un polymère thixotrope, un polymère pseudoplastique, du polyuréthane, une amide d'acide polyhydroxycarboxylique, de l'urée modifiée, un polyuréthane modifié par de l'urée ou un mélange de deux ou plusieurs de ces composés;

14. Le procédé selon une quelconque des revendications précédentes, dans lequel la composition de polymère comprend en outre un ou plusieurs additifs pseudoplastiques, modificateurs rhéologiques, agents antiaffaissement, agents stabilisants, agents égalisateurs, agents modificateurs de pH, agents antimousse, pigments, colorants, solvants organiques, plastifiants, stabilisants de viscosité, biocides, virucides, fongicides, humectants, agents réticulants, agents tensioactifs, colorants, stabilisants d' UV ou un mélange de deux ou plusieurs de ces composés.

15. Le procédé selon une quelconque des revendications précédentes, dans lequel le polymère filmogène comprend de l'alcool polyvinylique, et la composition de revêtement comprend en outre un biocide.
